# EUROPEAN PATENT APPLICATION

(11) **EP 3 505 665 A1**
(43) Date of publication of application: **03.07.2019**
(21) Application number: 18212296.0
(22) Date of filing: 13.12.2018
(51) Int. Cl.: D04H 3/045, B32B 5/02, B65H 49/18, B65H 51/005, D04H 3/16, D02H 1/00, D03D 47/30

(54) **TECHNICAL TEXTILE AND A DEVICE FOR ITS PRODUCTION**

(30) Priority: 28.12.2017 CZ 20170847
(71) Applicant: VÚTS, a.s., Liberec XI - Ruzodol I 460 01 Liberec (CZ)
(72) Inventor: Fabera, Jaroslav, 460 14 Liberec (CZ); Havlik, Jaroslav, 460 08 Liberec (CZ); Stodola, Petr, 464 01 Frydlant (CZ); Bomba, Tomas, 460 05 Liberec (CZ)
(74) Representative: Musil, Dobroslav

(57) **Abstract**

The invention relates to a technical textile (30) comprising a textile grid (3) connected to at least one thermoplastic film (31, 32). The grid (3) consists of two sets of warp threads (41), between which are arranged weft threads (42) without firm mutual bonding with the warp threads (41) and the firm bonding between them is created by connecting the grid (3) to the thermoplastic film (31, 32).

The invention also relates to a device for producing the technical textile (3), which comprises a bobbin creel (1) provided with a plurality of conical bobbins (10), from which individual threads are guided to a production line (2) as warp threads (41). Before entering the production line (2) the warp threads (41) are divided into a first and second sets of warp threads (41), from which the first set is brought to the circumference of an auxiliary drive cylinder (21), from whose circumference it passes to the circumference of the first main cylinder (22) rotating in a direction opposite to the direction in which it is brought to the second main cylinder (23) to whose circumference the second set of the warp threads (41) is fed, whereby in front of the wedge between the main cylinders (22.23) there is a space for inserting the weft (42), which is associated with a weft (42) transfer device upstream of the main cylinders (22, 23).

## Description

### Technical field

The invention relates to a technical textile containing a textile grid connected to at least one thermoplastic film.

In addition, the invention relates to a device for producing the technical textile comprising a bobbin creel provided with a plurality of conical bobbins from which individual threads are guided as warp threads to a production line.

### Technical field

The industry produces and uses numerous technical textiles, designed especially for the building industry, which include a textile grid, the so-called gauze. Such textiles are used, for example, for reinforcing facades and if they are associated with films, they are used, for example, as vapor barriers and the like. Textile grids are still produced on weaving machines whose productivity is high, but the aim of the invention is to develop a device that will be able to produce a textile grid with even higher productivity while allowing a uniform and firm fixing of the grid fibers.

### Principle of the invention

The object of the invention is achieved by a technical textile containing a textile grid, whereby the principle of the invention consists in that the grid consists of two sets of warp threads between which weft threads are arranged without any firm mutual bond with the warp threads and the firm bond between them is formed by connecting the grid to a thermoplastic film.

The principle of the invention consists in that before entering the production line, the warp threads are divided into a first and second sets of warp threads, the first set of which being guided to the circumference of an auxiliary driven cylinder, from which it moves to the circumference of the first main cylinder rotating in the direction opposite to the direction in which it is fed to the second main cylinder, to whose circumference is fed the second set of the warp threads, whereby in front of a wedge between the main cylinders there is a space for inserting a weft which is associated with a weft transfer mechanism in front of the main cylinders.

In a preferred embodiment, the transfer mechanism is formed by transfer nozzles directed to the wedge between the main cylinders.

In another preferred embodiment, the weft transfer mechanism is formed by an insertion mechanism arranged on the edges of a picking channel and on the edges of the main cylinders.

In addition, it is advantageous if the production line comprises a heat press machine of at least one thermoplastic film.

### Description of drawings

The invention is schematically represented in a drawing.

### Examples of embodiment

The technical textile according to the invention contains a textile grid **3** which, in contrast to the background art, consists of warp threads **41** and weft threads **42** without mutual bond, and the bond between the warp threads **41** and the weft threads **42** of the grid **3** is achieved only after connecting them to at least one thermoplastic film **31, 32,** whereby it is advantageous if the thermoplastic films **31, 32** are connected to the grid **3** from both sides.

The device according to the invention for producing the technical textile comprises two basic parts, namely a bobbin creel **1** and a production line **2,** which serves to produce a textile grid **3,** for example, from glass or cotton yarns.

The bobbin creel **1** is arranged as a separate machine before the production line **2** and serves to prepare a basic warp **4** for the future grid **3.** The bobbin creel **1** comprises a plurality of conical bobbins **10,** from which the individual threads are withdrawn and guided through a system of known guides and brakes (not shown) to a guide plate **11,** on which the withdrawn threads are distributed to form a warp **4** before entering the production line **2.** The guides, preferably ceramic guides, serve to provide a smooth draw of the individual withdrawn threads being directed towards the guide plate **11.** The brakes maintain the necessary tensile tension of the withdrawn threads to avoid crossing and/or kinking. The predetermined tensile tension of the withdrawn threads guarantees their precise distribution to the warp **4** before entering the production line **2*.***

Before entering the production line **2,** the warp **4** is divided into even and uneven warp threads **41** and these two sets of warp threads are in the divided state guided to the production line **2,** whereby the first set of the warp threads **41**, for example the uneven (upper) set, is guided through the auxiliary driven cylinder **21** and along its circumference is guided to the first main cylinder **22,** which rotates in the opposite direction. The second set of the warp threads **41,** for example the even (lower) set, is fed below the first main cylinder **22,** whose threads are deposited between the warp threads **41** of the first set on the surface of the second main cylinder **23,** onto which the warp threads **41** of the first set move from the first main cylinder **22.** In front of the wedge between the main cylinders **22, 23** is arranged a known picking channel **24** of the weft **42** insertion device by means of a flow of air. After picking the inserted weft **42** is cut at both ends by scissors **240** and introduced to the wedge between the two main cylinders **22, 23,** i.e. between the two sets of warp threads **41** and is carried between them to the downstream heat press machine **25.**

To insert the weft **42** from the picking channel **24,** the insertion mechanism **241** which is arranged on the edges of the picking channel **24** and the edges of the main cylinders **22, 23** is used. It is essential to maintain at least minimum tension in the inserted weft **42** during the whole operation of inserting the weft **42** between the warp threads **41**

In an alternative embodiment, the weft **42** transfer device is formed by transfer nozzles, directed to the wedge between the main cylinders **22, 23.**

The heat press machine **25** comprises two heated heat press cylinders **251**, **252**, or two heated heat press plates **251, 252** with controlled pressure and regulated temperature, between which is inserted a grid **3** formed by the warp threads **41** of the two sets, between which are clamped weft threads **42,** the grid being inserted together with the thermoplastic films **31, 32** which are fed from both sides of the grid **3.** The thermoplastic films **31, 32** are melted by the heat press machine **25** and the grid **3** is fixed between the films by the pressure between the heat press plates **251**, **252**, or, if appropriate, by the following calibration cylinders **261**, **262.** The resulting textile **30** is further guided to a winding device **27,** whereby in order to fully cool it, its free path must be sufficiently long or a cooling system is included in it.

In an alternative embodiment, the heat press plates **251**, **252,** or cylinders only serve to heat and partially connect the heated films **31, 32** to the grid **3,** and then the heated films **31, 32** with the grid **3** are introduced into a pressing device comprising at least one pair of pressure cylinders which can have adjustable compressive force.

In another alternative embodiment, only one thermoplastic film having adequate thickness and fusibility is used. Therefore, after melting the thermoplastic film and its compaction with the grid **3,** it secures sufficiently the fixing of the fibers of the grid **3** in the resulting textile **30.**

In a variant of an embodiment, the heat press plates **251, 252** are filled with heat transfer oil in and are connected to a reservoir of the heated oil and a reservoir of cooling oil via the heating pump and the cooling pump for controlling the temperature of the heat transfer oil in the cylinders.

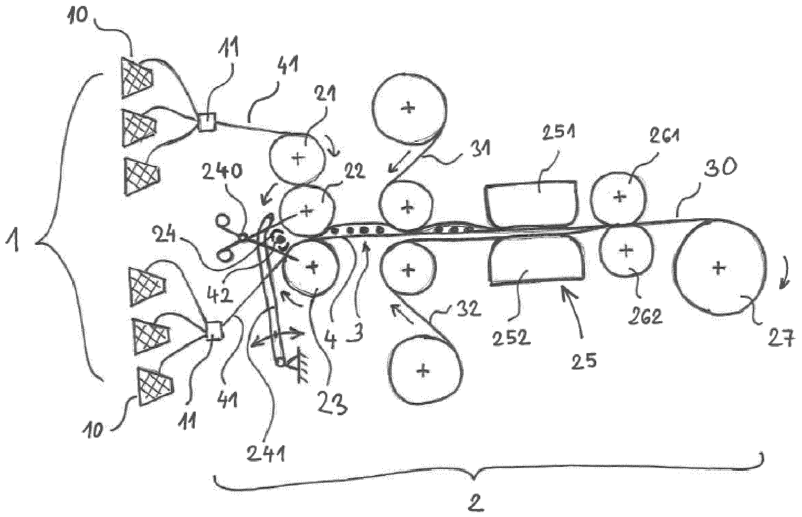

## Claims

1. A technical textile comprising a textile grid connected to at least one thermoplastic film, **characterized in that** the grid (3) consists of two sets of warp threads (41), between which are arranged weft threads (42) without mutual firm bonding with the warp threads (41), and the firm bonding between them is formed by connecting the grid (3) and the thermoplastic film (31, 32).

2. The device for producing the technical textile according to claim 1 comprising a bobbin creel (1) provided with a plurality of conical bobbins (10), from which individual threads are guided to the production line (2) as warp threads (41), **characterized in that** before entering the production line (2) the warp threads (41) are divided into a first and second sets of warp threads (41), the first set of which is brought to the circumference of an auxiliary drive cylinder (21), from which it moves to the circumference of the first main cylinder (22) rotating in a direction opposite to the direction in which it is brought to the second main cylinder (23) to whose circumference is brought the second set of the warp threads (41), whereby in front of a wedge between the main cylinders (22, 23) there is a space for inserting the weft (42) which is associated with a transfer device of weft (42) in front of the main cylinders (22, 23).

3. The device according to claim 2, **characterized in that** the weft (42) transfer device is formed by transfer nozzles directed to the wedge between the main cylinders (22, 23).

4. The device according to claim 2, **characterized in that** the weft (42) transfer device is formed by an insertion mechanism arranged on the edges of the picking channel (24) and on the edges of the main cylinders (22, 23).

5. The device according to any of claims 2 to 4, **characterized in that** the production line (2) comprises a heat press machine (25) at least one thermoplastic film.
